Europäisches Patentamt

European Patent Office

Office européen des brevets

(11) Veröffentlichungsnummer: **0 090 838**
**B1**

# (12) EUROPÄISCHE PATENTSCHRIFT

(45) Veröffentlichungstag der Patentschrift:
**05.02.86**

(51) Int. Cl.⁴: **B 62 L 1/16**

(21) Anmeldenummer: **82903144.2**

(22) Anmeldetag: **12.10.82**

(86) Internationale Anmeldenummer:
**PCT/EP 82/00226**

(87) Internationale Veröffentlichungsnummer:
**WO 83/01423 (28.04.83 Gazette 83/10)**

(54) **MITTELZUG-FELGENBREMSE.**

(30) Priorität: **15.10.81 DE 3141004**

(43) Veröffentlichungstag der Anmeldung:
**12.10.83 Patentblatt 83/41**

(45) Bekanntmachung des Hinweises auf die Patenterteilung:
**05.02.86 Patentblatt 86/6**

(84) Benannte Vertragsstaaten:
**AT CH DE FR GB LI**

(56) Entgegenhaltungen:
**EP - A - 0 023 414**
**DE - A - 2 639 008**
**FR - A - 907 896**
**FR - A - 950 639**
**FR - A - 976 210**

**Le Cycle, Band 17, Heft 29, Oktober 1962 (Paris, FR)**
**"Peugeot-nouveau frein arrière BEBO à double articulation et tirage par branches en acier plat", Seite 21**

(73) Patentinhaber: **Weinmann AG, Grubenstrasse 84, CH-8201 Schaffhausen (CH)**

(72) Erfinder: **SCHOCH, Robert, Am Steppbachwiesle 39, D-7701 Hilzingen (DE)**

(74) Vertreter: **Tetzner, Volkmar, Dr.-Ing. Dr. Jur., Van-Gogh-Strasse 3, D-8000 München 71 (DE)**

LIBER, STOCKHOLM 1986

## Beschreibung

Die Erfindung betrifft eine Mittelzug-Felgenbremse entsprechend dem Oberbegriff des Anspruches 1. Eine Mittelzug-Felgenbremse der im Oberbegriff des Anspruches 1 vorausgesetzten Art ist durch die FR-A- 976 210 bekannt. Der Kabelträger wird hierbei durch eine Buchse gebildet, auf der die beiden Zugstangen schwenkbar gelagert sind. Die Öffnungsbewegung der Bremse soll hierbei entweder durch geeignete (in der Patentschrift nicht dargestellte) Anschläge oder durch das Kabel selbst begrenzt werden.

Der Erfindung liegt die Aufgabe zugrunde, eine Mittelzug-Felgenbremse der im Oberbegriff des Anspruches 1 vorausgesetzten Art so auszubilden, daß sich eine fertigungs- und montagetechnisch einfache Gestaltung der Anschlagfläche und Gegenfläche sowie der schwenkgelenkigen Verbindung der Zugstangen mit dem Kabelträger ergibt.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Ein Ausführungsbeispiel der Erfindung ist in der Zeichnung veranschaulicht. Es zeigen

Fig.1 eine Vorderansicht der erfindungsgemäßen Mittelzug-Felgenbremse,

Fig.2 eine Rückansicht der Mittelzug-Felgenbremse gemäß Fig.1, wobei sich die Felgenbremse in ihrer Freigabestellung befindet,

Fig.3 eine Teilansicht (Ausschnitt III) der Felgenbremse gemäß Fig.2, zur Veranschaulichung des Zustandes des Kabelträgers mit den zugehörigen zugstangen-Enden bei ange-zogener Felgenbremse.

Die in der Zeichnung veranschaulichte MittelzugFelgenbremse 1 enthält als wesentliche Teile zwei in üblicher Weise ausgebildete, zweiarmige Bremsbügel 2 und 3, die an einer Tragplatte 4 schwenkbar gelagert sind und unter der Federkraft nicht näher veranschaulichter Federn stehen, ferner ein zentrales Zugkabel 5, dessen - hier veranschaulichtes - unteres Ende mit Hilfe einer Klemmschraube 6 an einem Kabelträger 7 in seiner wirksamen Zuglänge einstellbar festgeklemmt werden kann, sowie eine noch näher zu erläuternde Verbindung zwischen dem Kabelträger und den Bremsbügeln 2, 3.

Die Bremsbügel 2, 3 tragen an ihren unteren Enden 2a bzw. 3a in üblicher Weise Bremsklötze (nicht dargestellt), während ihre oberen Arme als sich überkreuzende Betätigungsarme 2b bzw. 3b ausgebildet sind. Die Verbindung zwischen den Bremsbügeln 2, 3 und den entsprechenden Enden der Tragplatte 4 wird durch übliche Schrauben 8 bzw. 9 gebildet, die gleichzeitig die Gelenkachsen für die Schwenklagerung der Bremsbügel bilden.

Von besonderer Bedeutung ist, daß die freien Enden 2b' und 3b' der beiden Bremsbügel-Betätigungsarme 2b bzw. 3b mit dem Kabelträger 7 durch zwei Zugstangen 10,11 gleicher Länge verbunden sind. Diese Verbindung ist derart, daß die Zugstangen 10, 71 mit dem Kabelträger 7 und den freien Enden 2b' und 3b' der Bremsbügel-Betätigungsarme 2b und 3b schwenkgelenkig verbunden sind. Zu diesem Zweck sind die beiden Enden l0a, l0b bzw. 17a, 71b jeder Zugstange 10, 11 als ösenartig erweiterte Lagerenden mit einer Lagerbohrung 70a', 10b' bzw. 11a', 11b' ausgebildet, durch die die zugehörigen Lagerzapfen 12 hindurchgreifen, die in üblicher Weise etwa nietenförmig ausgebildet und angebracht sind.

Am Außenumfang des am Kabelträger 7 angelenkten Lagerendes 10a bzw. 11a jeder Zugstange 70, 71 ist eine Anschlagfläche 13 bzw. 14 angeformt, die gerade bzw. tangentenförmig verläuft und bei geöffneter Felgenbremse mit einer Gegenfläche am Lagerträger zum Anschlag kommt.

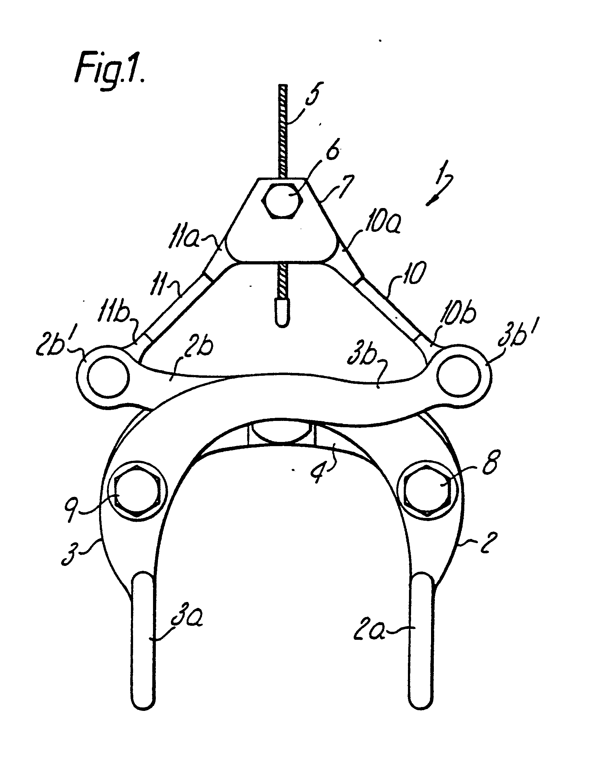

In einer bevorzugten Ausführungsform weist der Kabelträger 7 in der Vorder- bzw. Rückansicht eine symmetrische Dreiecks- oder Trapezform auf; in der zeichnerischen Darstellung der Fig.1 bis 3 wird die Trapezform bevorzugt. Der Kabelträger 7 ist dabei ferner aus einer ebenen Platte aus massivem Material, vorzugsweise Metall (Aluminiumlegierung oder ähnliches) hergestellt, wobei jedoch auch ein entsprechend festes Kunststoffmaterial denkbar ist. Im Bereich seiner senkrechten Symmetrieachse, die mit der senkrechten Symmetrieachse 17 der Felgenbremse 1 zusammenfällt, besitzt der Kabelträger 7 eine Nut l8, die so groß bemessen ist, daß das Zugkabel 5 bündig darin aufgenommen werden kann.

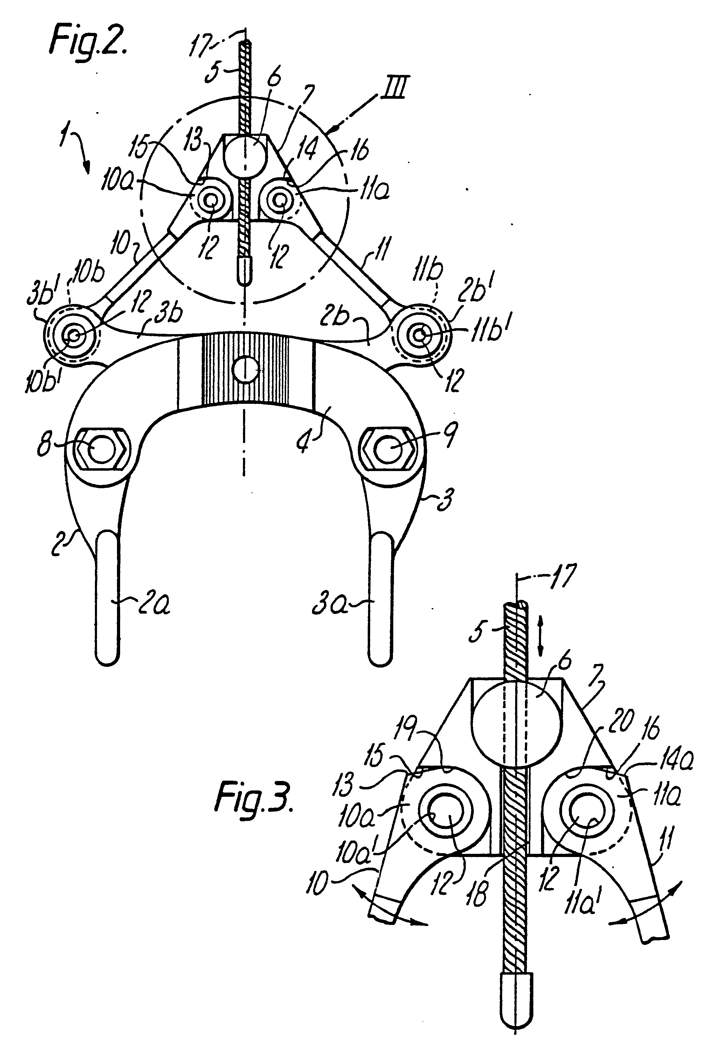

Der Kabelträger 7 weist beim veranschaulichten Ausführungsbeispiel nach der Rückseite hin (vgl. Fig.2 und 3) offene, symmetrisch auf beiden Seiten seiner senkrechten Symmetrieachse 17 vorgesehene Ausfräsungen 19, 20 auf, deren Tiefe etwa der Dicke der Zugstangen-Lagerenden 70a bzw. 11a entspricht und die eine im wesentlichen kreisbogenförmige InnenumfangsFührungsfläche besitzen, die dem Außenumfang der genannten Lagerenden 10a bzw. 11a angepaßt sind, so daß diese Lagerenden bündig in den zugehörigen Ausfräsungen 19 bzw. 2O aufgenommen werden können. Wie die Fig.2 und 3 deutlich zeigen, ist an der Innenumfangs-Führungsfläche jeder Kabelträger-Ausfräsung 19 bzw. 20 die mit der Anschlagfläche 13 bzw. 14 des zugehörigen Zugstangen-Lagerendes 10a bzw. 11a zusammenwirkende gerade Gegenfläche 15 bzw. 16 angeformt. Diese Gegenflächen 15, 16 bilden dabei jeweils das obere,etwa tangential nach außen weisende freie Ende der ansonsten kreisbogenförmigen Innenumfangs-Führungsfläche jeder Ausfräsung 19, 20.

Wenn bei dieser erfindungsgemäßen Ausführungsform das Zugkabel 5 am Kabelträger 7 montiert und in seiner wirksamen Zuglänge eingestellt werden soll, dann wird dies in der normalen, also nicht angezogenen Stellung der Felgenbremse 1 erfolgen. Aufgrund der vorgesehenen starren Zugstangen 7O,11, der

Anordnung von Anschlagflächen 13, 14 an diesen Zugstangen und der Ausbildung von Gegenflächen 15 bzw. 16 am Kabelträger 7 ist es beim Lösen und Anziehen der Mutter der Klemmschraube 6 nicht erforderlich, den Kabelträger 7 besonders festzuhalten. Man hat vielmehr die eine Hand frei, um das Zugkabel 5 in der erforderlichen wirksamen Zuglänge gegenüber dem Kabelträger 7 einzustellen und festzuhalten, so daß die Klemmschraube 6 dann angezogen und das Zugkabel 5 in der benötigten Zuglänge festgeklemmt wird. Die geschilderte Ausbildung und Form des Kabelträgers 7 trägt ferner neben einem guten Aussehen und der guten Funktion dazu bei, daß praktisch kaum störende Befestigungsteile von dem Kabelträger 7 abstehen. Schließlich gewinnt die erfindungsgemäße Felgenbremse 1 gegenüber bekannten Ausführungen auch erheblich an Stabilität.

Die Befestigung dieser Mittelzug-Felgenbremse am Rahmen insbesondere eines Fahrrades ist nicht Gegenstand der vorliegenden Erfindung; sie kann mit einem üblichen Befestigungsbolzen und Zubehör erfolgen.

**Patentansprüche.**

1. Mittelzug-Felgenbremse enthaltend
a) zwei an einer Trag latte (4) schwenkbar gelagerte, unter Federkraft stehende zweiarmige Bremsbügel (2 3) mit sich überkreuzenden Betätigungsarmen (2b, 3b),
b) ein zentrales Zugkabel (5),
c) einen mit einer Klemmschraube (6) versehenen Kabelträger (7) zum Festklemmen des Zugkabels (5) am Kabelträger (7) in einstellbarer wirksamer Zuglänge,
d) zwei Zugstangen (10, 11) gleicher Länge, die mit dem Kabelträger (7) und den freien Enden (2b', 3b ') der Bremsbügel-Betätigungsarme (2b, 3b) schwenkgelenkig verbunden sind,
e) eine Anschlagfläche, die bei geöffneter Bremse mit einer Gegenfläche zum Anschlag kommt;
dadurch gekennzeichnet, daß die beiden Enden (10a, 10b bzw. 11a, 11b) jeder Zugstange (11, 10) jeweils als ösenartig erweitertes Zugstangenende mit einer Lagerbohrung (10a', 10b' bzw. 11a', 11b') ausgebildet sind, durch die der zugehörige Schwenkzapfen (12) hindurchgreift, und daß am Außenumfang des am Kabelträger (7) angelenkten Zugstangenendes ( 10a, 11 a) die Anschlagfläche (13, 14) angeformt ist, die bei geöffneter Bremse (1) mit einer Gegenfläche (15 bzw. 16) am Kabelträger (7) zum Anschlag kommt.

2. Felgenbremse nach Anspruch 1, dadurch gekennzeichnet, daß der Kabelträger (7) nach der Vorder- oder Rückseite hin offene, symmetrisch auf beiden Seiten seiner senkrechten Symmetrieachse (17) vorgesehene Ausfräsungen (19, 20) aufweist, deren Tiefe etwa der Dicke des am Kabelträger (7) angelenkten Zugstangenendes (10a, 11 a) entspricht und die eine dem Außenumfang dieses Zugstangenendes angepaßte, im wesentlichen kreisbogenförmige InnenumfangsFührungsfläche besitzen, an die sich die mit der Anschlagfläche (13, 14) zusammenwirkende Gegenfläche (15, 16) anschließt.

3. Felgenbremse nach Anspruch 2, dadurch gekennzeichnet, daß der aus einer ebenen platte aus Massivmaterial hergestellte Kabelträger (7) in der Vorder- bzw. Rückansicht eine symmetrische Dreiecks- oder Trapezform aufweist und im Bereich seiner senkrechten Symmetrieachse (17) eine Nut (18) zur bündigen Aufnahme des Zugkabels (5) besitzt.

**Claims:**

1. Rim brake with central traction com risin
a) two two-armed brake levers (2, 3) which are pivotably mounted on a mounting plate (4), are held under spring tension and have actuating arms (2b, 3b) which cross over each other,
b) a central traction cable (5),
c) a cable carrier (7) provided with a clamping screw (6) to clamp the traction cable (5) onto the cable carrier (7) at an adjustable effective traction length,
d) two pull rods (10, 11) of equal length which are pivotably connected to the cable carrier (7) and the free ends (2b', 3b') of the brake lever actuating arms (2b, 3b),
e) a stop surface which comes to rest on a matching surface when the brake is opened,
characterised in that the two ends (10a, 1 0b or 11, 11b, resp.) of each pull rod (10, 11) are constructed as pull rod ends widened like eyelets with a bearing hole (10a', 10b' or 11a', 11b', resp.) through which the associated pivot pin (12) passes, and in that the stop surface (13, 14) which comes to rest on a matching surface (15 or 16, resp.) on the cable carrier (7) when the brake (1) is opened is formed on the outer periphery of the pull rod end (1 0a, 1 1a) pivotably provided at the cable carrier (7).

2. Rim brake according claim 1, characterised in that the cable carrier (7) has recesses (19, 20) which are open towards the front or rear side and are arranged symmetrically on both sides of its vertical axis of symmetry (17), the depth of said recesses corresponding approximately to the thickness of the pull rod ends (10a, 1 1a) pivotably mounted at the cable carrier (7), the recesses having a substantially circular inner peripheral guide surface adapted to the outer periphery of said pull rod end, the matching surface (15, 1 6) which cooperates with the stop surface (13, 14) being provided adjacent said guide surface.

3. Rim brake according claim 2, characterised in that the cable carrier (7) is made from a flat plate of solid material, - has a symmetrical triangular or trapezoide shape when viewed from the front or back and has a groove (1 8) in the region of its vertical axis of symmetry (17) to flushly receive the traction cable (5).

## REVENDICATIONS

1. Frein sur jante à actionnement central, comprenant :

a) deux étriers de freinage (2, 3) à deux bras, articulés sur une plaquette de support (4), soumis à une force élastique et dont les bras d'actionnement (2b, 3b) se croisent en suprposition,

b) un câble central de traction (5),

c) un porte-câble (7) équipé d'un boulon de serrage (6) destiné à bloquer le câble de traction (5) à une longueur réglable efficace de traction,

d) deux tiges de traction (10, 11) de même longueur reliées par articulations au porte-câble (7) et à l'extrémité libre (2b', 3b') du bras d'actionnement (2b, 3b) des étriers de freinage,

e) une surface de butée qui entre en appui contre une surface de retenue lorsque le frein est ouvert, caractérisé en ce que les deux extrémités (10a, 10b ainsi que 11a, 11b) de chaque tige de traction (11, 10) sont elargies en oeillets formant un trou de montage (10a',10b' ainsi que 11a', 11b') par lequel passe le pivot correspondant (12) et le pourtour extérieur de l'extrémite (10a, 11a) des tiges de traction qui est articulée sur le porte-câble (7) est conformé en surface de butée (13, 14) qui entre en appui contre une surface de retenue (15 ainsi que 16) du porte-câble (7) lorsque le frein (1) est ouvert.

2. Frein sur jante selon la revendication 1, caracterisé en ce que le porte-câble (7) comporte des fraisures (19, 20) ouvertes sur sa surface antérieure ou sa surface arriere, disposées symétriquement des deux côtés de son axe vertical (17) de symétrie et dont la profondeur correspond approximativement è l'épaisseur de l'extrémite (10a, 11a) des tiges de traction qui est articulée sur ce porte-câble (7), lesdites fraisures (19, 20) formant sur leur pourtour intérieur des surfaces de guidage essentiellement en arc de cercle conforme au pourtour extérieur de cette extrémité des tiges de traction, lesdites surfaces de guidage se prolongeant en surfaces de retenue (15, 16) qui cooperent avec lesdites surfaces de butée (13, 14).

3. Frein sur jante selon la revendication 2, caractérisé en ce que le porte-cable (7), qui est realise sous forme d'une plaque plane de matériau massif, présente en vue de face ou en vue arriere la forme d'un triangle ou d'un trapêze symétrique et comporte le long de son axe vertical de symétrie (17) une gorge (18) destinée à loger le câble de traction (5) de manière qu'il arrive à fleur de sa surface.

**Fig.1.**

0 090 838

Fig.2.

Fig.3.

3